# EUROPÄISCHE PATENTSCHRIFT

(11) **EP 2 025 380 B1**
(45) Veröffentlichungstag und Bekanntmachung des Hinweises auf die Patenterteilung: **14.01.2015**
(21) Anmeldenummer: 08013626.0
(22) Anmeldetag: 29.07.2008
(51) Int. Cl.: B01D 3/22

(54) **Austauschböden für Stoffaustauschkolonnen im Off-Shore Einsatz**
Interchangeable bases for material exchange columns for off-shore use
Plaques d'échange pour colonnes d'échange de matière dans l'utilisation off-shore

(30) Priorität: 02.08.2007 DE 102007036180
(43) Veröffentlichungstag der Anmeldung: 18.02.2009
(73) Patentinhaber: Linde AG, 80331 München (DE)
(72) Erfinder: Alzner, Gerhard, 81476 München (DE)

(56) Entgegenhaltungen:
- EP-A2- 0 339 706
- GB-A- 765 304
- JP-A- 55 001 835
- US-A- 1 811 247
- US-A- 2 366 958
- US-A- 3 162 700
- US-A- 4 556 522
- US-A- 5 352 276

## Beschreibung

Die Erfindung betrifft eine Stoffaustauschkolonne mit mindestens einem Austauschboden über den Flüssigkeit in im Wesentlichen horizontaler Richtung und durch den Gas in vertikaler Richtung geleitet wird, wobei der Austauschboden als Reverse-Flow-Boden ausgebildet ist und ein erstes Mittel (Trennwehr) zur Änderung der Strömungsrichtung von über den Austauschboden strömender Flüssigkeit um mindestens 90°, insbesondere um etwa 180°, aufweist, sowie eine Verwendung der Stoffaustauschkolonne.

In Stoffaustauschkolonnen wird aufsteigendes Gas in direktem Kontakt mit der im Gegenstrom herabfließenden Flüssigkeit gebracht, um beispielsweise Destillations-oder Waschprozesse durchzuführen. Die vorliegende Erfindung befasst sich mit Stoffaustauschkolonnen, welche eine Vielzahl von übereinander horizontal angeordneten Austauschböden aufweisen. Austauschböden sind z. B. aus K. Hoppe, M. Mittelstrass "Grundlagen der Dimensionierung von Kolonnenböden" Technische Fortschrittsberichte, Bd. 61 (1967) bekannt.

Flüssigkeit fließt aus einem Zulaufschacht von oben auf die Grundfläche, strömt im Wesentlichen in horizontaler Richtung über die Grundfläche und tritt über einen Ablaufschacht nach unten wieder aus. Die Standhöhe der Flüssigkeit wird unter Anderem durch ein vor dem Ablaufschacht angeordnetes Ablaufwehr bestimmt. Über Öffnungen in der Grundfläche des Austauschbodens tritt Gas in die quer fließende Flüssigkeit ein und durchströmt diese in Blasenform. Dadurch wird der gewünschte direkte Kontakt zwischen Flüssigkeit und Gas erzeugt.

In bestimmten Anwendungsfällen, beispielsweise bei Rückwaschböden am Kopf von Waschkolonnen und deren Regenerierkolonnen, steht nur sehr wenig Flüssigkeit zur Verfügung. In diesem Fall werden in den entsprechenden Kolonnen oder Kolonnenabschnitten Reverse-Flow-Böden eingesetzt, wie sie beispielsweise in DE 102005044224 als Stand der Technik beschrieben werden. Zulauf und Ablauf der Böden liegen auf der gleichen Seite. In der Mitte des Austauschbodens befindet sich eine vertikale einseitig offene Trennwand, die eine Strömungsumlenkung der Flüssigkeit um etwa 180 ° erzwingt. Eine derartige Trennwand bildet im Zusammenwirken mit der Kolonnenwand ein "Mittel zur Änderung der Strömungsrichtung von über die Grundfläche strömender Flüssigkeit".

Eine derartige Strömungsumkehr erhöht gegenüber normalen einflutigen Böden die Strömungsgeschwindigkeit der Flüssigkeit und verbessert die Strömungsführung und damit die Wirksamkeit des Bodens. Insbesondere bei großen Kolonnendurchmessern wird jedoch eine gleichmäßige Flüssigkeitsüberströmung schwieriger. Eine Verbesserung der Flüssigkeitsüberströmung wird in DE 102005044224 dadurch erreicht, dass sich mindestens eine zweite Trennwand auf dem Austauschboden befindet, welche nicht unmittelbar mit der ersten Trennwand verbunden ist. Die zweite Trennwand wird beispielsweise parallel oder versetzt zur ersten Trennwand angeordnet, wodurch eine zweite Strömungsumlenkung bzw. Strömungsumkehr erzwungen wird. Dadurch wird die Flüssigkeitsverteilung über die Grundfläche des Bodens gleichmäßiger, die flüssigkeitsseitige Rückvermischung wird verringert und schlecht durchströmte Toträume werden vermieden, so dass die Flüssigkeitsmenge teilweise reduziert werden kann. Bei Rückwaschvorgängen beispielsweise kann so eine geringere Menge an Rückwaschwasser eingesetzt werden. Entsprechend geringer ist der Aufwand zur Bereitstellung und Entsorgung des Rückwaschwassers.

Problematisch wird der Einsatz derartiger Stoffaustauschkolonnen unter Off-Shore-Bedingungen, wie beispielsweise auf einem Schiff. Unter Off-Shore-Bedingungen, wie sie beispielsweise auf einem Schiff herrschen, ändert sich beständig, beispielsweise durch Wellenbewegungen, die Neigung der Stoffaustauschkolonne gegenüber der Vertikalen. Die Flüssigkeit auf dem Austauschboden würde sich somit, der Schwerkraft folgend, an einer Seite sammeln bzw. von der anderen Seite wegfließen. Zusätzlich entstehen bei Änderung des Neigungswinkels gegenüber der Vertikalen auch Horizontal-Beschleunigungen in der Flüssigkeit, wodurch in der Flüssigkeit Schwallbewegungen induziert werden. Unter derartigen Bedingungen entsteht bei Austauschböden nach dem Stand der Technik eine ständige Ungleichverteilung der Flüssigkeit. Dadurch geht jedoch die Wirksamkeit der Kolonne verloren, da stellenweise zu wenig Flüssigkeit im Verhältnis zur Gasmenge im Gegenstrom durch die Kolonne strömt, beziehungsweise Gas und Flüssigkeit ohne Austausch aneinander vorbei geleitet werden.

Der vorliegenden Erfindung liegt daher die Aufgabe zugrunde, eine Stoffaustauschkolonne mit mindestens einem Austauschboden derart auszugestalten, dass eine nahezu gleichmäßige Verteilung der Flüssigkeit über den Austauschboden und somit die Funktionsfähigkeit der Stoffaustauschkolonne auch bei vorhandener bzw. sich ständig ändernder Neigung der Stoffaustauschkolonne gegenüber der Vertikalen gewährleistet ist.

Die vorliegende Aufgabe wird dadurch gelöst, dass der Austauschboden mindestens ein weiteres Mittel zur Führung der Flüssigkeitsströmung (Leitwehr) und mindestens ein weiteres Mittel zur Verringerung der Strömungsgeschwindigkeit (Bremswehr) aufweist, wobei der Austauschboden durch Trennwehr, Leitwehr/e und/oder Bremswehr/e in Sektionen aufgeteilt ist.

Die Probleme der Stoffaustauschkolonnen mit Austauschböden beim Einsatz dieser Kolonnen unter Off-Shore-Bedingungen werden hauptsächlich durch das Nachlaufen der Flüssigkeit mit der Schwerkraft aufgrund der Neigung der Kolonne gegenüber der Vertikalen verursacht. Der Grundgedanke der Erfindung besteht darin, dieses Nachlaufen zu verhindern bzw. derart zu verzögern, dass eine nahezu gleichmäßige Verteilung der Flüssigkeit über den gesamten Austauschboden erreicht wird. Dies wird durch den Einsatz der erfindungsgemäßen Leit- und Bremswehr/e und die damit verbundene erfindungsgemäße Unterteilung des Austauschbodens in Sektionen erreicht.

Unter einem als Leitwehr bezeichneten Mittel zur Führung der Flüssigkeitsströmung werden im Sinne der Erfindung vertikale Wände verstanden, die Strömung der Flüssigkeit auf dem Austauschboden vom Flüssigkeitseinlass zum Flüssigkeitsauslass zu führen bzw. zu leiten. Unter einem als Bremswehr bezeichneten Mittel zur Verringerung der Strömungsgeschwindigkeit werden vertikale Wände verstanden, welche in Zusammenwirkung mit den anderen Wehren und den Wänden der Stoffaustauschkolonne der Verringerung der Strömungsgeschwindigkeit bzw. der Horizontalbeschleunigung der Flüssigkeit auf dem Austauschboden dienen. Dies können beispielsweise vertikale Wände quer zur Strömungsrichtung sein.

Durch das Trennwehr und die erfindungsgemäßen Leitwehre wird die Flüssigkeit nicht nur vom Einlass zum Auslass geführt, sondern auch eine Querströmung verhindert bzw. gebremst, wie sie durch eine Verkippung der Stoffaustauschkolonne gegenüber der Vertikalen induziert werden würde. Durch das Zusammenwirken des Trennwehres mit den erfindungsgemäßen Leitwehren und Bremswehren wird der Austauschboden in Sektionen unterteilt. Durch die erfindungsgemäßen Wehre wird die Flüssigkeit auch bei Verkippungen der Stoffaustauschkolonne gegenüber der Vertikalen deutlich länger in den Sektionen gehalten. Ein freies Abfließen aus den Sektionen aufgrund der Schwerkraft bei Verkippung und ein damit verbundenes schnelles Nachfließen der Flüssigkeit zu einer Seite entsprechend der Kolonnenneigung wird somit verhindert, so dass eine nahezu Gleichverteilung der Flüssigkeit über den gesamten Austauschboden erreicht wird.

Vorteilhafter Weise ist jede Sektion durch mindestens ein Trenn-, Leit-, Bremswehr und/oder die Wand der Stoffaustauschkolonne vollständig begrenzt. Durch die vollständige Begrenzung der Sektionen wird ein neigungsbedingtes Abfließen der Flüssigkeit aus der Sektion in jeder Richtung verhindert. Eine Gleichverteilung der Flüssigkeit wird gewährleistet.

Zweckmäßiger Weise werden die Leit- und Bremswehre von der Flüssigkeit unterströmt und/oder die Leit- bzw. Bremswehre weisen Abschnitte auf, die zumindest teilweise für die Flüssigkeit durchlässig sind. Um einen Weitertransport der Flüssigkeit von Boden zu Boden zu gewährleisten bzw. um einen Austausch zwischen den einzelnen Sektionen nach einem Neigungswechsel zu erreichen, müssen die Leit- bzw. Bremswehre von der Flüssigkeit teilweise passiert werden können. In einer Ausgestaltung der Erfindung werden dazu die Leit- und Bremswehre in einer vorgegebenen Höhe über dem Austauschboden an der Kolonnenwand befestigt und untereinander verbunden. Die Flüssigkeit kann somit unter den Leit- bzw. Bremswehren hindurch von einer Sektion in die Nächste fließen. Ein freies Fließen wird jedoch durch die Wehre verhindert. Der Flüssigkeitsspiegel in einer Sektion bleibt dabei immer deutlich über der Montagehöhe der Leit- bzw. Bremswehre. In einer anderen Ausgestaltung der Erfindung weisen die Leit- und Bremswehre Abschnitte auf, die zumindest teilweise für die Flüssigkeit durchlässig sind. Dies lässt sich beispielsweise durch das Einbringen von Aussparungen in Form von Durchlässen oder Zacken erreichen.

Bevorzugt weist der Austauschboden Kaminhalsglocken zur vertikalen Durchführung des Gases auf, wobei Kaminhals und Kaminglocke derart dimensioniert werden, dass der Gasaustrittsschlitz, welcher durch den Spalt zwischen Austauschboden und der Unterkante der Kaminglocke gebildet wird, auch bei Neigung der Stoffaustauschkolonne gegenüber der Vertikalen immer unterhalb des Flüssigkeitsspiegels auf dem Austauschboden liegt. Das Gas wird also bevorzugt über Kaminhalsglocken durch den Austauschboden geführt. Eine Kaminhalsglocke besteht aus den Kaminhals und einer darüberliegenden Kaminglocke. Das Gas strömt von unten durch den Kaminhals gegen die, auf den Kaminhals in einem bestimmten Abstand aufgesetzte, Kaminglocke, wird dort um etwa 180 ° umgelenkt und tritt durch den Gasaustrittsschlitz in die Flüssigkeit aus. Kaminhals und Kaminglocke werden derart dimensioniert, dass dieser Gasaustrittsschlitz immer unterhalb des Flüssigkeitsspiegels auf den Austauschboden liegt. Dadurch wird gewährleistet, dass das Gas unabhängig von der Neigung der Stoffaustauschkolonne in die Flüssigkeit eintritt und diese zwangsdurchströmt. Der gewünschte direkte Stoffaustausch zwischen Gasphase und Flüssigkeit ist somit gewährleistet.

Besonders bevorzugt liegt der Gasaustrittsschlitz unterhalb der unterströmten Leit-und/oder Bremswehre. In einer Ausgestaltung der Erfindung werden die Leit- und Bremswehre an der Stoffaustauschkolonne in einer bestimmten Höhe über den Austauschboden befestigt. Der Gasaustrittsschlitz liegt in dieser Ausgestaltung unterhalb dieser Höhe. Die Flüssigkeit staut sich an den Wehren und unterströmt diese. Durch die Positionierung des Gasaustrittsschlitzes unterhalb der Montagehöhe der Wehre werden die Kaminhalsglocken permanent von Flüssigkeit umströmt und somit wird auch in dieser Ausgestaltung der Erfindung gewährleistet, dass die Gasphase immer in die Flüssigkeit austritt und diese durchperlt. Die von der Flüssigkeit umströmten Kaminhalsglocken wirken zusätzlich Schwallbewegungen der Flüssigkeit entgegen.

In einer weiteren Ausgestaltung der Erfindung weisen Ein- und/oder Ablaufwehr Abschnitte auf, die zumindest teilweise für die Flüssigkeit durchlässig sind. In dieser Ausgestaltung der Erfindung sind Ein- bzw. Ablaufwehr teilweise für die Flüssigkeit durchlässig, so dass eine gleichmäßig Verteilung des gesamten Flüssigkeitsstroms auf die Sektionen erreicht wird. Dies lässt sich beispielsweise durch das Anbringen einer Öffnung oder eines Spaltes im Ein- und/oder Ablaufwehr an jeder Sektion erreichen.

Besonders bevorzugt wird die erfindungsgemäße Stoffaustauschkolonne im Off-Shore-Betrieb auf einem schwimmenden Trägersystem betrieben. Bei einer Verwendung der erfindungsgemäßen Stoffaustauschkolonne auf einem Schiff, wird diese vorteilhafter Weise derart ausgerichtet, dass das Trennwehr entlang der Längsachse des Schiffes ausgerichtet ist. Bei dieser Verwendung der Stoffaustauschkolonne wird die Strömung der Flüssigkeit durch die Leitwehre einmal in und einmal entgegen der Längsachse des Schiffes geführt. Querströmung der Flüssigkeit hervorgerufen durch die Neigung des Schiffes werden somit schon durch die Leitwehre effektiv vermieden.

Mit der vorliegenden Erfindung gelingt es insbesondere, eine gleichmäßige Verteilung der Flüssigkeit über die gesamte Fläche des Austauschbodens auch bei verschiedenen Neigungen der Stoffaustauschkolonne gegenüber der Vertikalen, wie sie im Off-Shore-Betrieb vorkommen, zu gewährleisten. Schwallbewegungen der Flüssigkeit werden durch die Erfindung unterdrückt. Die Funktion der Kolonne ist somit auch unter widrigen Bedingungen gewährleistet.

Im Folgenden soll die Erfindung anhand des in den Figuren dargestellten Ausführungsbeispieles näher erläutert werden.

Es zeigen
- Figur 1: einen Austauschboden einer Ausgestaltung der Erfindung in der Draufsicht,
- Figur 2: die Seitenansicht eines Bremswehres entlang der Linie A A',
- Figur 3: die Seitenansicht einer Ausgestaltung des Ein- und Ablaufwehres.

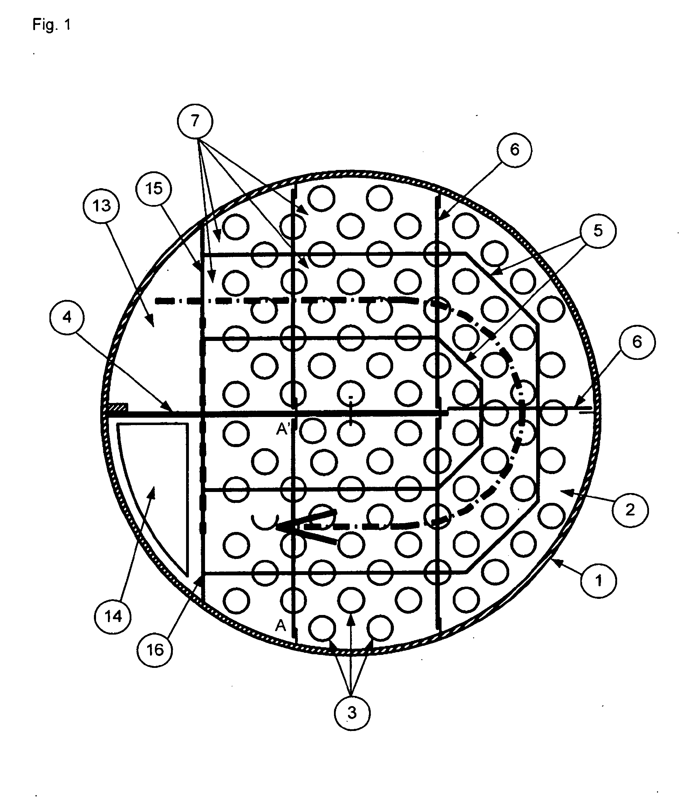

Figur 1 zeigt eine Ausgestaltung der erfindungsgemäßen Stoffaustauschkolonne (1) die Flüssigkeit wird vom nächsthöheren Austauschboden auf den dargestellten Austauschboden (2) geleitet (13) und verlässt den dargestellten Austauschboden (2) über den Ablaufschacht (14) zum nächsten darunterliegenden Austauschboden. Das Gas durchströmt den Austauschboden (2) durch eine Vielzahl von Kaminhalsglocken (3). Der Austauschboden (2) ist als Reverse-Flow-Boden ausgeführt. Die Flussrichtung der Flüssigkeit wird vom Einlauf (13) zum Ablaufschacht (14) durch das Trennwehr (4) um etwa 180 ° umgelenkt. Die Strömung der Flüssigkeit wird dabei durch die Leitwehre (5) vom Einlauf (13) zum Ablaufschacht (14) geleitet. Quer zur geführten Strömung der Flüssigkeit befinden sich zahlreiche Bremswehre (6), welche den Austauschboden (2) in Kombination mit den Leitwehren (5), dem Trennwehr (4) und der Wand der

Stoffaustauschkolonne (1) in mehrer Sektionen (7) unterteilen. Ein, durch die Neigung der Kolonne gegenüber der Vertikalen induziertes, Herausströmen der Flüssigkeit aus diesen Sektionen (7) wird durch den Einsatz der erfindungsgemäßen Wehre (5, 6) verzögert, wodurch eine nahezu Gleichverteilung der Flüssigkeit über den gesamten Austauschboden (2) gewährleistet ist.

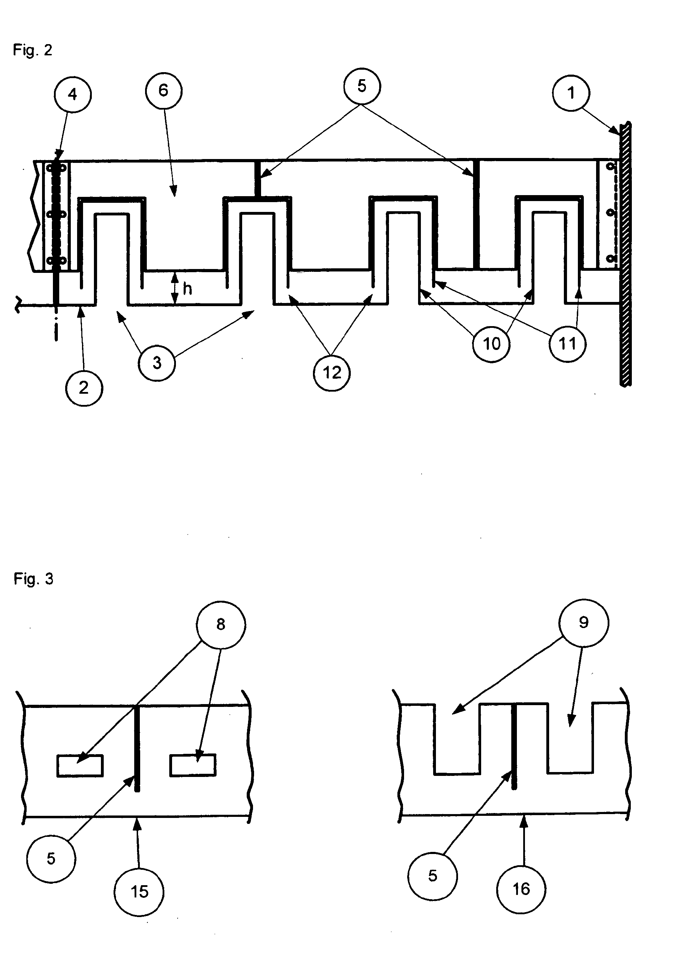

Figur 2 zeigt die Seitenansicht eines Bremswehres (6) mit mehreren Kaminhalsglocken (3) entlang der Linie A A'. Das dargestellte Wehr ist in einer gewissen Höhe (h) über den Austauschboden (2) an der Wand der Stoffaustauschkolonne befestigt. Das Gas tritt von unten in den Kaminhals (10), wird durch die Kaminglocke (11) um etwa 180 ° umgelenkt und tritt über den Gasaustrittsschlitz (12) in die Flüssigkeit ein, durchperlt diese und sorgt somit für einen direkten Stoffaustausch. Der Gasaustrittsschlitz (12) befindet sich in dieser Ausgestaltung der Erfindung unterhalb der Höhe (h) der Wehre.

Figur 3 zeigt die Seitenansicht einer Ausgestaltung des Ein- (15) und Ablaufwehres (16). Das Ein- (15) bzw. Ablaufwehr (16) ist zumindest teilweise für die Flüssigkeit durchlässig. In der Ausgestaltung sind die Durchlässe (8,9) für die Flüssigkeit so positioniert, dass die Flüssigkeit gleichmäßig auf die dahinterliegenden Sektionen aufgeteilt wird.

## Patentansprüche

1. Stoffaustauschkolonne (1) mit mindestens einem Austauschboden (2) über den Flüssigkeit in im Wesentlichen horizontaler Richtung und durch den Gas über Kaminhalsglocken (3) in vertikaler Richtung geleitet wird, wobei der Austauschboden (2) als Reverse-Flow-Boden ausgebildet ist und ein Trennwehr (4) zur Änderung der Strömungsrichtung von über den Austauschboden strömender Flüssigkeit um mindestens 90°, insbesondere um etwa 180°, und mindestens ein Leitwehr (5) zur Führung der Flüssigkeitsströmung aufweist, **dadurch gekennzeichnet, dass** der Austauschboden (2) mindestens ein Bremswehr (6) zur Verringerung der Strömungsgeschwindigkeit aufweist, wobei der Austauschboden (2) durch Trennwehr (4), Leitwehr/e (5) und/oder Bremswehr/e (6) in Sektionen (7) aufgeteilt ist, wobei eine Sektion (7) an jeder Seite mindestens ein Trennwehr (4), Leitwehr (5), Bremswehr (6) oder die Wand der Stoffaustauchkolonne (1) aufweist, welche die Sektion (7) vollständig begrenzen, und wobei Leit (5)- und Bremswehre (6) über dem Austauschboden (2) unterströmbar von der Flüssigkeit befestigt sind und/oder Durchlässe (8,9) für die Flüssigkeit in Form von Aussparungen (8,9) aufweisen.

2. Stoffaustauschkolonne nach Anspruch 1, **dadurch gekennzeichnet, dass** Kaminhals (10) und Kaminglocke (11) derart dimensioniert werden, dass der Gasaustrittsschlitz (12), welcher durch den Spalt zwischen der Unterkante der Kaminglocke (11) und dem Austauschboden (2) gebildet wird, auch bei Neigung der Stoffaustauschkolonne (1) gegenüber der Vertikalen immer unterhalb des Flüssigkeitsspiegels auf dem Austauschboden liegt.

3. Stoffaustauschkolonne nach Anspruch 2, **dadurch gekennzeichnet, dass** der Gasaustrittsschlitz (12) unterhalb der unterströmten Leit- (5) und/oder Bremswehre (6) liegt.

4. Stoffaustauschkolonne nach einem der Ansprüche 1 bis 3, **dadurch gekennzeichnet, dass** Ein- (15) und/oder Ablaufwehr (16) Abschnitte (8,9) aufweisen, die zumindest teilweise für die Flüssigkeit durchlässig sind.

5. Verwendung einer Stoffaustauschkolonne (1) nach einem der Ansprüche 1 bis 4, **dadurch gekennzeichnet, dass** die Stoffaustauschkolonne im Off-Shore Betrieb auf einem schwimmenden Trägersystem betrieben wird.

6. Verwendung nach Anspruch 5, **dadurch gekennzeichnet, dass** die Stoffaustauschkolonne (1) auf einem Schiff derart ausgerichtet ist, dass das Trennwehr (4) entlang der Längsachse des Schiffes ausgerichtet ist.

## Claims

1. Mass-transfer column (1) having at least one transfer tray (2) via which liquid is directed in an essentially horizontal direction and through which gas is directed in a vertical direction via flue-neck caps (3), wherein the transfer tray (2) is designed in the form of a reverse-flow tray and has a separating weir (4), by means of which liquid flowing via the transfer tray has its direction of flow changed through at least 90°, in particular through approximately 180°, and at least one directing weir (5) for guiding the liquid flow, **characterized in that** the transfer tray (2) has at least one braking weir (6) for reducing the flow speed, wherein the transfer tray (2) is divided up into sections (7) by the separating weir (4), directing weir/s (5) and/or braking weir/s (6), wherein a section (7), on each side, has at least one separating weir (4), directing weir (5), braking weir (6) or the wall of the mass-transfer column (1), which delimit the section (7) in full, and wherein directing (5) and braking weirs (6) are fastened above the transfer tray (2) such that liquid can flow beneath them and/or they have through-passages (8, 9) for the liquid in the form of apertures (8, 9).

2. Mass-transfer column (1) according to Claim 1, **characterized in that** the flue neck (10) and flue cap (11) are dimensioned such that the gas-outlet slit (12), which is formed by the gap between the lower edge of the flue cap (11) and the transfer tray (2), is always located beneath the level of liquid of the transfer tray, even in the case of the mass-transfer column (1) being inclined in relation to the vertical.

3. Mass-transfer column according to Claim 2, **characterized in that** the gas-outlet slit (12) is located beneath the directing (5) and/or braking weirs (6), with the liquid flowing beneath them.

4. Mass-transfer column according to one of Claims 1 to 3, **characterized in that** an entry weir (15) and/or exit weir (16) have/has portions (8, 9) which are at least partially permeable to the liquid.

5. Use of a mass-transfer column (1) according to one of Claims 1 to 4, **characterized in that** the mass-transfer column is operated off shore on a floating carrier system.

6. Use according to Claim 5, **characterized in that** the mass-transfer column (1) is positioned on a ship such that the separating weir (4) is aligned along the longitudinal axis of the ship.

## Revendications

1. Colonne d'échange de matière (1) avec au moins une plaque d'échange (2) au-dessus de laquelle du liquide est conduit dans une direction essentiellement horizontale et à travers laquelle du gaz est conduit en direction verticale au moyen de cloches à col de cheminée (3), dans laquelle la plaque d'échange (2) est réalisée sous forme de plaque à flux inversé et présente une paroi de séparation (4) pour le changement de la direction d'écoulement de liquide s'écoulant au-dessus de la plaque d'échange d'au moins 90°, en particulier d'environ 180°, et au moins une paroi de guidage (5) pour le guidage de l'écoulement de liquide, **caractérisée en ce que** la plaque d'échange (2) présente au moins une paroi de ralentissement (6) pour diminuer la vitesse d'écoulement, dans laquelle la plaque d'échange (2) est divisée en sections (7) par une paroi de séparation (4), une/des paroi(s) de guidage (5) et/ou une/des paroi(s) de ralentissement (6), dans laquelle une section (7) présente sur chaque côté au moins une paroi de séparation (4), une paroi de guidage (5), une paroi de ralentissement (6) ou la paroi de la colonne d'échange de matière (1), qui délimitent entièrement la section (7), et dans laquelle des parois de guidage (5) et de ralentissement (6) sont fixées au-dessus de la plaque d'échange (2) de façon franchissable par dessous par le liquide et/ou présentent des passages (8, 9) pour le liquide sous la forme de découpes (8, 9).

2. Colonne d'échange de matière selon la revendication 1, **caractérisée en ce que** le col de cheminée (10) et la cloche de cheminée (11) sont dimensionnés de telle manière que la fente de sortie de gaz (12), qui est formée par l'espace entre l'arête inférieure de la cloche de cheminée (11) et la plaque d'échange (2), se trouve toujours en dessous du niveau de liquide sur la plaque d'échange même en cas d'inclinaison de la colonne d'échange de matière (1) par rapport à la verticale.

3. Colonne d'échange de matière selon la revendication 2, **caractérisée en ce que** la fente de sortie de gaz (12) se trouve en dessous des parois de guidage (5) et/ou de ralentissement (6) franchies par dessous.

4. Colonne d'échange de matière selon l'une quelconque des revendications 1 à 3, **caractérisée en ce qu'**une paroi d'entrée (15) et/ou de sortie (16) présentent des parties (8, 9), qui sont au moins partiellement perméables au liquide.

5. Utilisation d'une colonne d'échange de matière (1) selon l'une quelconque des revendications 1 à 4, **caractérisée en ce que** la colonne d'échange de matière est utilisée en exploitation off-shore sur un système de support flottant.

6. Utilisation selon la revendication 5, **caractérisée en ce que** la colonne d'échange de matière (1) est installée sur un bateau, de telle manière que la paroi de séparation (4) soit orientée selon l'axe longitudinal du bateau.
